# DEMANDE DE BREVET EUROPEEN

(11) **EP 4 813 784 A1**
(43) Date de publication de la demande: **30.09.2026**
(21) Numéro de dépôt: 26168584.6
(22) Date de dépôt: 27.03.2026
(51) Int. Cl.: B60W 40/103

(54) **PROCÉDÉ ET DISPOSITIF D'ESTIMATION D'UNE VALEUR D'ANGLE DE DÉRIVE D'UN VÉHICULE**

(30) Priorité: 27.03.2025 FR 2503182
(71) Demandeur: AMPERE s.a.s., 92100 Boulougne-Billancourt (FR)
(72) Inventeur: SAMADA, Sergio-Emil, 28108 Alcobendas (ES)
(74) Mandataire: Renault Group

(57) **Abrégé**

- Procédé et dispositif d'estimation d'une valeur d'angle de dérive d'un véhicule, en particulier un véhicule automobile.
- Le procédé d'estimation comprend une étape d'acquisition pour acquérir des données d'état représentatives d'une dynamique du véhicule (V), une étape d'estimation pour déterminer au moins la valeur de l'angle de dérive (*β*) du véhicule (V) à l'aide d'un observateur zonotopique et des données d'état et une étape de transmission pour transmettre au moins la valeur de l'angle de dérive (*β*) déterminée à un dispositif utilisateur, ledit procédé d'estimation permettant d'estimer la valeur de l'angle de dérive (*β*) qui n'est pas mesurée directement sur le véhicule (V), et ce de manière fiable et précise tout en étant économe en terme de ressources de calcul pour les calculateurs du véhicule (V).

## Description

### Domaine technique

La présente invention concerne un procédé et un dispositif d'estimation d'une valeur d'angle de dérive d'un véhicule, en particulier un véhicule automobile.

### État de la technique

Dans le domaine automobile, l'utilisation de systèmes d'aide à la conduite (ou ADAS pour « Advanced Driver Assist System » en anglais) dans les véhicules est de plus en plus répandue. Ces systèmes ont pour objectifs, notamment, d'améliorer la sécurité routière et la circulation, de réduire la pollution, de minimiser les erreurs de conduite et d'améliorer le confort des conducteurs. C'est le cas, par exemple, du système automatisé de maintien dans la voie (aussi appelé LKAS pour « Lane Keeping Assist System » en anglais) ou du système d'alerte de franchissement involontaire de ligne (aussi appelé LDWS pour « Lane Departure Warning System »). Ces systèmes permettent d'aider le conducteur à gérer la trajectoire latérale de son véhicule et ainsi de réduire la fatigue, à la fois physique et mentale, du conducteur.

Afin de rendre ces systèmes sûrs et robustes, leur conception doit être basée sur des modèles représentant les comportements dynamiques du véhicule de manière fiable et précise. En particulier, dans le cadre des systèmes précités, leur fonctionnement nécessite de disposer de dynamiques latérales non-linéaires du véhicule telles que l'angle de dérive (ou « slideslip angle » en anglais) du véhicule au niveau de son centre de gravité.

Cependant, dans les systèmes d'aide à la conduite usuels, l'angle de dérive du véhicule est une grandeur qui n'est pas prise en compte. En effet, l'angle de dérive correspond à une dynamique du véhicule qui est difficilement, voire non-mesurable directement sur le véhicule via des capteurs usuels. Ainsi, dans les lois de commande des systèmes d'aide à la conduite existants, l'angle de dérive du véhicule est généralement négligé.

Par ailleurs, on connaît des méthodes permettant d'estimer l'angle de dérive d'un véhicule. Toutefois, ces méthodes ne sont pas complètement satisfaisantes, notamment en termes de précision et de complexité de calcul. En effet, pour représenter précisément les dynamiques latérales d'un véhicule, il est nécessaire de recourir à des modèles non-linéaires qui peuvent être difficiles à mettre en œuvre d'un point de vue de la puissance de calcul disponible sur le véhicule. Ainsi, les méthodes connues ne permettent pas d'estimer l'angle de dérive d'un véhicule de manière précise et suffisamment simple pour pouvoir être mises en œuvre en temps réel par les calculateurs disponibles sur les véhicules usuels.

Il existe donc un besoin de trouver des méthodes plus satisfaisantes pour estimer l'angle de dérive d'un véhicule.

### Exposé de l'invention

La présente invention a pour objet de remédier aux inconvénients précités. Elle concerne un procédé d'estimation d'une valeur de l'angle de dérive d'un véhicule.

Selon l'invention, le procédé d'estimation comprend la suite d'étapes successives suivante :
- une étape d'acquisition, mise en œuvre par une unité d'acquisition, pour acquérir des données d'état représentatives d'une dynamique du véhicule ;
- une étape d'estimation, mise en œuvre par un calculateur, pour déterminer au moins la valeur de l'angle de dérive du véhicule à l'aide d'un observateur zonotopique et des données d'état acquises à l'étape d'acquisition ; et
- une étape de transmission, mise en œuvre par une unité de transmission, pour transmettre au moins la valeur de l'angle de dérive déterminée à l'étape d'estimation, à un dispositif utilisateur.

Ainsi, grâce à l'invention, on est en mesure d'estimer de manière fiable et précise une grandeur qui n'est généralement pas mesurée directement sur le véhicule, à savoir la valeur de l'angle de dérive. Par conséquent, cette valeur de l'angle de dérive du véhicule peut être prise en compte par des systèmes du véhicule tels que le système d'aide à la conduite, et notamment des systèmes de gestion du comportement latéral du véhicule comme le système de maintien dans la voie.

Avantageusement, les données d'état acquises à l'étape d'acquisition comprennent au moins les données suivantes : la vitesse longitudinale du véhicule, la vitesse angulaire du véhicule, l'accélération longitudinale du véhicule et l'angle de braquage de roues du véhicule.

En outre, de façon avantageuse, l'observateur zonotopique est défini par la formule mathématique suivante : ${x}_{k + 1} = \left〈{c}_{k + 1}, {R}_{k + 1}\right〉$ dans laquelle :
- *x* = [*β w_{z} vₓ*]*^{T}* est un vecteur des variables d'état à estimer ;
- *c* est le centre de l'observateur zonotopique ;
- R est la matrice génératrice de l'observateur zonotopique ; et
- k€ ∈ N est une variable de temps discret,
   *c*_{*k*+1} et *R*_{*k*+1} étant définis par les formules suivantes : ${c}_{k + 1} = {\sum }_{i = 1}^{{n}_{r}} {\overline{ω}}_{k}^{i} \left({ζ}_{k}\right) \left(\left({A}^{i}-{L}^{i}C\right){c}_{k}+{B}^{i}{u}_{k}+{L}^{i}{y}_{k}\right)$ ${R}_{k + 1} = {\sum }_{i = 1}^{{n}_{r}} {\overline{ω}}_{k}^{i} \left({ζ}_{k}\right) \left(\left[\left({A}^{i}-{L}^{i}C\right){R}_{k}, E, -{L}^{i}F\right]\right)$ dans lesquelles :
   - *nᵣ* est un nombre de règles en logique floue selon un modèle de Takagi-Sugeno ;
   - *u* = [*δ αₓ*]*^{T}* est un vecteur de données de commande ;
   - *y* = [ *w_{z} vₓ*]*^{T}* est un vecteur de données mesurées ;
   - *Aⁱ, Bⁱ, C, E,* et *F* sont des matrices des variables d'état présentant des dimensions adaptées ;
   - *ζ* = [*w_{z} vₓ*]*^{T}* est un vecteur des variables initiales ;
   - ${\overline{ω}}_{k}^{i}$ est un ensemble de fonctions d'appartenance tel que la propriété de convexité est satisfaite, à savoir ${\overline{ω}}_{k}^{i} \left({ζ}_{k}\right) > 0$ et ${\sum }_{i = 1}^{{n}_{r}} {\overline{ω}}_{k}^{i} \left({ζ}_{k}\right) = 1$; = ; et
   - L est une matrice de gain prédéterminée de l'observateur zonotopique.

Dans un mode de réalisation particulier, le procédé d'estimation comprend une étape préliminaire, mise en œuvre par un calculateur avant la suite d'étapes et de façon indépendante du véhicule, pour déterminer une matrice de gain optimale minimisant l'erreur d'estimation sur la valeur de l'angle de dérive, la matrice de gain prédéterminée de l'observateur zonotopique correspondant à ladite matrice de gain optimale.

Avantageusement, à l'étape préliminaire, la matrice de gain optimale de l'observateur zonotopique est déterminée à l'aide de la formule mathématique suivante : $L = {\sum }_{i = 1}^{{n}_{r}} {\overline{ω}}_{k}^{i} \left({ζ}_{k}\right) {L}^{i avec i = 1 , … , {n}_{r} ,}$ dans laquelle *Lⁱ* = *Y*⁻¹*Vⁱ*, *Y* et *Vⁱ* étant les solutions du système d'inégalité matricielle linéaire suivant de sorte à minimiser le scalaire *γ* : $\left[\begin{matrix}- Y & {YA}^{i} - {V}^{i} C & EY & {V}^{i} \\ {A}^{i , T} Y - {C}^{T} {V}^{i , T} & - Y & 0 & 0 \\ {YE}^{T} & 0 & - I & 0 \\ {V}^{i , T} & 0 & 0 & - {Q}_{v}^{- 1}\end{matrix}\right] < 0$ $\left[\begin{matrix}γI & I \\ I & Y\end{matrix}\right] > 0$ dans lequel :
- *Q_{ω} = EE^{T}* est la covariance du zonotope englobant les incertitudes d'état ;
- *Qᵥ* = *FF^{T}* est la covariance du zonotope englobant les bruits de mesure ; et
- I est la matrice identité.

Dans un mode de réalisation particulier, à l'étape d'estimation au moins une valeur d'incertitude associée à la valeur de l'angle de dérive est déterminée, ladite valeur d'incertitude étant transmise au dispositif utilisateur à l'étape de transmission.

La présente invention concerne également un dispositif d'estimation d'une valeur de l'angle de dérive d'un véhicule.

Selon l'invention, le dispositif d'estimation comporte au moins :
- une unité d'acquisition configurée pour acquérir des données d'états représentatives d'une dynamique du véhicule ;
- un calculateur configuré pour déterminer la valeur d'au moins l'angle de dérive du véhicule à l'aide d'un observateur zonotopique et des données d'état acquises par l'unité d'acquisition ; et
- une unité de transmission configurée pour transmettre la valeur de l'angle de dérive du véhicule déterminée par le calculateur à un dispositif utilisateur.

La présente invention concerne également un véhicule comportant un dispositif d'estimation tel que décrit ci-dessus.

La présente invention concerne également un procédé d'aide à la conduite d'un véhicule, en particulier d'aide au maintien dans la voie, destiné à commander un système de direction du véhicule de manière à corriger la trajectoire dudit véhicule si nécessaire.

Selon l'invention, le procédé d'aide à la conduite comprend au moins la suite d'étapes successives suivante :
- une étape d'acquisition, mise en œuvre par une unité d'acquisition, pour acquérir un ensemble de données d'entrée représentatives d'une dynamique et/ou d'une configuration du véhicule ;
- une étape d'estimation, mise en œuvre par un dispositif d'estimation, pour déterminer au moins une valeur de l'angle de dérive. du véhicule à partir de données de l'ensemble de données d'entrée ;
- une étape de détermination, mise en œuvre par un calculateur, pour déterminer un ordre de commande pour le système de direction du véhicule à partir d'une loi de commande prenant en compte des données de l'ensemble de données d'entrée acquis à l'étape d'acquisition et la valeur de l'angle de dérive déterminée à l'étape d'estimation ; et
- une étape de commande, mise en œuvre par un dispositif de commande, pour commander le système de direction du véhicule à l'aide de l'ordre de commande déterminé à l'étape de détermination,
la détermination de la valeur de l'angle de dérive du véhicule à l'étape d'estimation étant réalisée en mettant en œuvre le procédé d'estimation tel que décrit ci-dessus.

La présente invention concerne également un système d'aide à la conduite d'un véhicule, en particulier de maintien dans la voie, destiné à commander un système de direction du véhicule de manière à corriger la trajectoire dudit véhicule si nécessaire.

Selon l'invention, le système d'aide à la conduite comporte au moins :
- une unité d'acquisition configurée pour acquérir un ensemble de données d'entrée représentatives d'une dynamique et/ou d'une configuration du véhicule ;
- un dispositif d'estimation configuré pour déterminer au moins la valeur de l'angle de dérive du véhicule à partir de données de l'ensemble de données d'entrée acquis par l'unité d'acquisition ;
- un calculateur configuré pour déterminer un ordre de commande pour le système de direction du véhicule à partir d'une loi de commande prenant en compte des données de l'ensemble de données d'entrée acquis par l'unité d'acquisition et la valeur de l'angle de dérive déterminée par le dispositif d'estimation ;
- un dispositif de commande configuré pour commander le système de direction du véhicule à l'aide de l'ordre de commande déterminé par le calculateur,
le dispositif d'estimation correspondant à un dispositif d'estimation tel que celui décrit ci-dessus.

La présente invention concerne également un véhicule comportant au moins un système d'aide à la conduite tel que décrit ci-dessus.

### Brève description des figures

Les figures annexées feront bien comprendre comment l'invention peut être réalisée. Sur ces figures, des références identiques désignent des éléments semblables.
La [Fig.1] est une vue schématique d'un véhicule équipé un système d'aide à la conduite comprenant un dispositif d'estimation d'une valeur de l'angle de dérive du véhicule selon un mode de réalisation particulier.
La [Fig.2] est une vue schématique d'un système d'aide à la conduite comprenant un dispositif d'estimation d'une valeur de l'angle de dérive d'un véhicule selon un mode de réalisation particulier.
La [Fig.3] est une vue schématique, de dessus, d'un véhicule en train de réaliser un virage permettant d'illustrer la notion d'angle de dérive.
La [Fig.4] est un schéma synoptique d'un procédé d'aide à la conduite faisant intervenir un procédé d'estimation d'une valeur d'angle de dérive selon un mode de réalisation particulier.

### Description détaillée

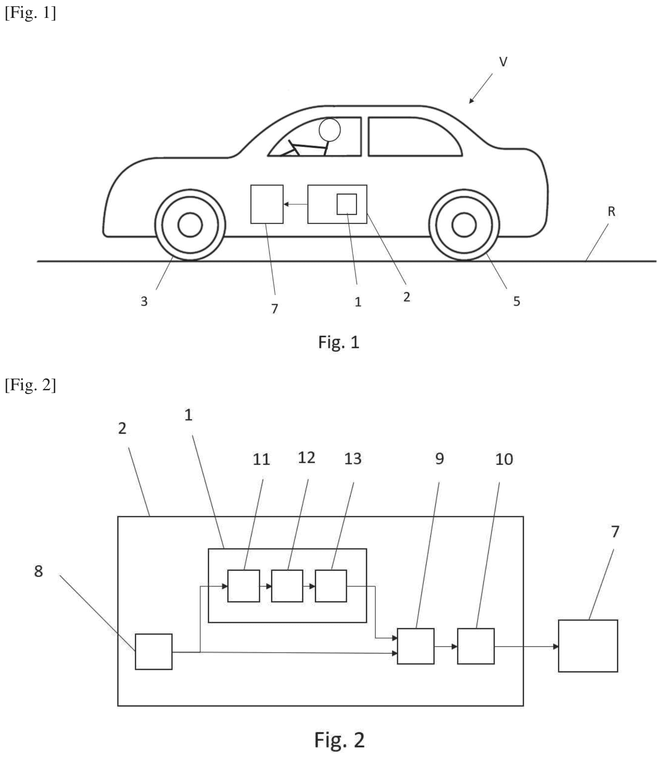

Le dispositif d'estimation 1 représenté schématiquement sur la figure 1 et la figure 2 dans un mode de réalisation particulier, est un dispositif destiné à déterminer la valeur d'un angle de dérive *β* d'un véhicule V comme expliqué ci-après. Bien que non exclusivement, le dispositif 1 est adapté pour être intégré dans un système d'aide à la conduite 2 du véhicule V, en particulier un système d'aide au contrôle latéral du véhicule V, par exemple un système de maintien dans la voie.

Dans le cadre de la présente invention, le véhicule V peut correspondre à un véhicule terrestre motorisé, par exemple un véhicule de type automobile, camion, ou encore un véhicule de type motocycle ou scooter.

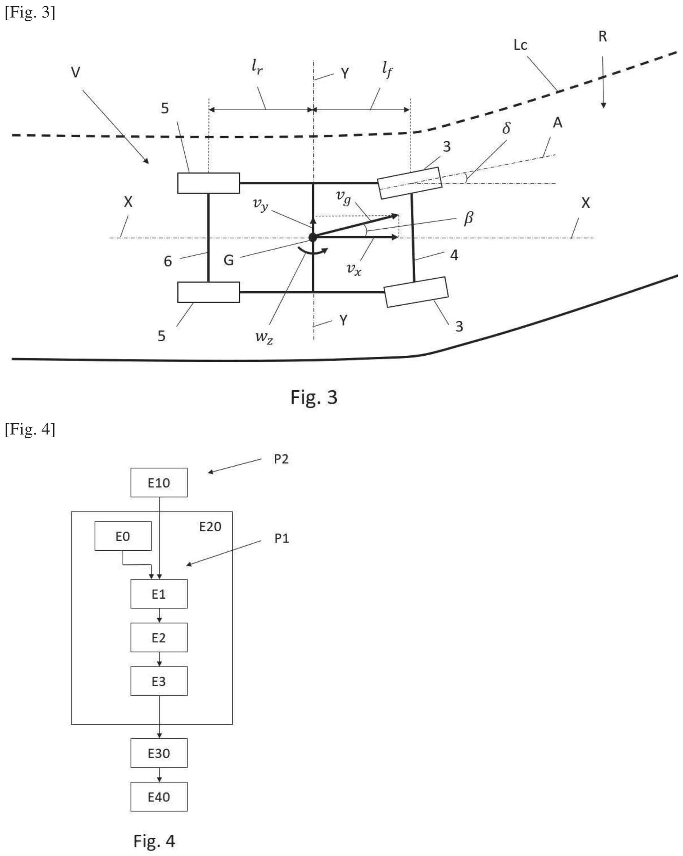

En outre, on entend par « angle de dérive » du véhicule V, l'angle formé entre la direction selon laquelle le véhicule V est orienté et la direction selon laquelle il se déplace. Autrement dit, comme représenté schématiquement sur la figure 3, l'angle de dérive *β* du véhicule V correspond à l'angle entre un vecteur de vitesse longitudinale vₓ du véhicule V et un vecteur de vitesse globale v_{g} du véhicule V (c'est-à-dire le vecteur somme du vecteur de vitesse longitudinale vₓ et d'un vecteur de vitesse latérale v_{y}).

Dans le mode de réalisation de la [Fig.1], le véhicule V correspond à un véhicule automobile susceptible de rouler sur une chaussée R. Le véhicule V comprend un châssis pourvu de deux roues 3 avant montées sur un axe 4 et de deux roues 5 arrières montées sur un axe 6. Comme représenté schématiquement sur la [Fig.3], la direction longitudinale du véhicule V est définie par un axe X longitudinal sensiblement orthogonal aux axes 4 et 6. La direction latérale du véhicule V est définie par un axe Y latéral, orthogonal à l'axe X.

Sur la figure 3, le véhicule V est représenté schématiquement, vu de dessus, en train de réaliser un virage. Il s'agit d'une situation permettant d'illustrer le phénomène de dérive faisant intervenir l'angle de dérive *β* que l'on souhaite estimer. Dans le mode de réalisation particulier de la [Fig.3], seules les roues 3 avant du véhicule V sont directrices. Toutefois, la présente invention n'est pas limitée à cette configuration particulière.

Lors du virage du véhicule V, les roues 3 avant présentent un angle de braquage *δ* correspondant à l'angle formé entre une direction longitudinale des roues 3, représentée par un axe A, et la direction longitudinale du véhicule V (axe X). Dans cette situation, le véhicule V présente une vitesse longitudinale vₓ, dont le vecteur est orienté selon la direction longitudinale du véhicule V (axe X) dans le sens d'avance du véhicule (V), et une vitesse latérale v_{y}, dont le vecteur est orienté selon la direction latérale du véhicule V (axe Y) vers l'intérieur du virage. Le véhicule V présente donc une vitesse globale v_{g} dont le vecteur est la somme des vecteurs de la vitesse longitudinale vₓ et de la vitesse latérale v_{y}. Le vecteur de vitesse globale v_{g} est orienté vers l'intérieur du virage, avec un angle par rapport à la direction longitudinale de véhicule V correspondant à l'angle de dérive *β* que l'on souhaite déterminer.

Par ailleurs, le véhicule V est équipé d'une pluralité de capteurs et de dispositifs configurés pour mesurer ou déterminer, notamment, des valeurs représentatives de la dynamique du véhicule V. Dans le cadre de la présente invention, le terme « dynamique » désigne l'ensemble des caractéristiques liées, directement ou indirectement, aux mouvements du véhicule V. Ainsi, le terme « dynamique » englobe des notions telles que la vitesse, l'accélération et la décélération.

Dans le mode de réalisation particulier de la [Fig.1], le véhicule V comprend un système d'aide à la conduite 2. Il s'agit d'un système destiné, lorsque cela est nécessaire et dans des conditions particulières (non détaillées dans la présente description), à corriger la trajectoire du véhicule V. Pour cela, le système d'aide à la conduite 2 est configuré pour pouvoir agir sur un système de direction 7 du véhicule V, comme détaillé ci-dessous. Le système de direction 7 peut correspondre à un système de direction assistée usuel à commande électrique.

Comme représenté schématiquement sur la figure 2, le système d'aide à la conduite 2 comprend une première unité d'acquisition 8 configurée pour acquérir un ensemble de données d'entrée représentatives de la dynamique et/ou de la configuration du véhicule V. De manière non exhaustive, les données représentatives de la dynamique du véhicule V peuvent comprendre des grandeurs telles que sa vitesse longitudinale, sa vitesse angulaire, son accélération longitudinale. En outre, les données représentatives de la configuration du véhicule V peuvent comprendre des données sur l'état du véhicule V ou de ses équipements, ainsi que des données sur l'environnement du véhicule V. Par exemple, les données sur l'état du véhicule V peuvent comprendre des grandeurs telles que l'angle de braquage *δ* des roues 3, une valeur d'erreur latérale ou encore une valeur d'erreur d'orientation. Les erreurs latérale et d'orientation correspondent à des erreurs de position du véhicule V par rapport à un élément de référence, par exemple par rapport à une ligne centrale Lc (pouvant correspondre à un marquage au sol) présente sur la chaussée R et représentée sur la [Fig.3]. Par ailleurs, les données sur l'environnement du véhicule V peuvent comprendre des grandeurs telles qu'une courbure de la chaussée R.

L'ensemble de données d'entrée acquis par l'unité d'acquisition 8 peut être obtenu via des éléments de mesure ou de calcul usuels (non représentés sur les figures) du véhicule V. En effet, toutes les grandeurs relatives à la dynamique ou à la configuration du véhicule V ne sont pas toujours directement mesurables. Aussi, certaines grandeurs peuvent être mesurées par des capteurs du véhicule V tandis que d'autres grandeurs peuvent être déterminées par des dispositifs de calcul.

Par ailleurs, comme représenté sur la [Fig.2], le système d'aide à la conduite 2 comprend un calculateur 9 configuré pour déterminer un ordre de commande pour le système de direction 7 du véhicule V. Le calculateur 9 comprend des éléments électroniques usuels tels qu'un microprocesseur.

L'ordre de commande est déterminé à partir d'une loi de commande prenant en compte des données de l'ensemble de données d'entrée et la valeur d'angle de dérive *β* du véhicule V. Afin de déterminer l'ordre de commande, les données de l'ensemble de données d'entrée sont mises à disposition du calculateur 9 par l'unité d'acquisition 8 et la valeur de l'angle de dérive *β* est mise à disposition par le dispositif d'estimation 1 tel que décrit ci-dessous.

La loi de commande correspond à une loi usuelle permettant de déterminer un angle de braquage de consigne pour les roues 3 avant en fonction de l'ensemble de données d'entrée et de l'angle de dérive *β* du véhicule V. Une fois l'angle de braquage de consigne déterminé, la loi de commande élabore un ordre de commande pour le système de direction 7 permettant d'obtenir ledit angle de braquage de consigne. Pour ce faire, la loi de commande intègre, notamment, un asservissement sur l'angle de braquage *δ* des roues 3 avant, mis en œuvre par un régulateur PID (pour régulateur « Proportionnel Intégral Dérivé ») usuel.

Le système d'aide à la conduite 2 comprend également un dispositif de commande 10 configuré pour commander le système de direction 7 à l'aide de l'ordre de commande déterminé par le calculateur 9. Le dispositif de commande 10 peut correspondre à un distributeur électrique usuel apte à commander un moteur électrique (non représenté) afin d'actionner le système de direction 7 de façon usuelle et ainsi obtenir la correction de trajectoire souhaitée.

Dans le mode de réalisation de la figure 1, le système d'aide à la conduite 2 comprend le dispositif d'estimation 1 configuré pour déterminer la valeur de l'angle de dérive *β* du véhicule V de manière à fournir ladite valeur au calculateur 9.

Pour ce faire, le dispositif d'estimation 1 comprend une unité d'acquisition 11 configurée pour acquérir des données d'état représentatives de la dynamique du véhicule V. Dans le mode de réalisation particulier illustré par la [Fig.2], les données d'état correspondent à des données provenant de l'ensemble de données d'entrée acquis par l'unité d'acquisition 7. Toutefois, dans d'autres modes de réalisation, l'unité d'acquisition 11 peut acquérir les données d'état d'une autre manière, par exemple directement depuis les capteurs du véhicule V.

De manière non exhaustive, les données d'état acquises par l'unité d'acquisition 11 peuvent comprendre la vitesse longitudinale *vₓ*, la vitesse angulaire *w_{z}* et l'accélération longitudinale *αₓ* du véhicule V ainsi que l'angle de braquage *δ* des roues 3.

En outre, le dispositif d'estimation 1 comprend un calculateur 12 configuré pour déterminer la valeur de l'angle de dérive *β* du véhicule V. Pour cela, le calculateur 12 est programmé à l'aide d'un algorithme faisant intervenir une méthode ensembliste permettant d'estimer la valeur de l'angle de dérive *β*. Plus précisément, il s'agit d'une méthode ensembliste utilisant un observateur d'état correspondant à un observateur zonotopique ainsi que les données d'état acquises par l'unité d'acquisition 11. Le calculateur 12 comprend des éléments électroniques usuels tels qu'un microprocesseur.

Un observateur d'état correspond à un outil mathématique permettant d'estimer l'état d'un système dynamique tout en tenant compte des incertitudes qui peuvent affecter le système. À l'inverse d'un observateur d'état traditionnel qui suppose généralement que les incertitudes sur une variable d'état suivent une distribution statistique précise, un observateur zonotopique utilise une approche géométrique déterministe, dans le cas présent un zonotope (à savoir un objet géométrique représentant un ensemble convexe), pour représenter les incertitudes. L'observateur zonotopique présente l'avantage d'englober les incertitudes de manière plus générale, même pour les systèmes non linéaires, ce qui le rend plus flexible et robuste qu'un observateur d'état classique (comme un filtre de Kalman).

Dans le cadre de la présente invention appliquée au véhicule V, un modèle en temps continu de la dynamique latérale du véhicule V peut s'écrire sous la forme du système suivant : $\left\{\begin{matrix}\dot{β} = - \frac{{C}_{f} + {C}_{r}}{m {v}_{x}} β - {w}_{z} + \frac{{C}_{f} {l}_{f} + {C}_{r} {l}_{r}}{m {{v}_{x}}^{2}} {w}_{z} + \frac{{C}_{f}}{m {v}_{x}} δ \\ {\dot{w}}_{z} = - \frac{{C}_{f} {l}_{f} + {C}_{r} {l}_{f}}{J} β - \frac{{C}_{f} {l}_{f}^{2} + {C}_{r} {l}_{r}^{2}}{m {v}_{x}} {w}_{z} + \frac{{C}_{f} {l}_{f}}{J} δ \\ {\dot{v}}_{x} = {w}_{z} β {v}_{x} + {α}_{x}\end{matrix}\right.$ dans lequel :
- *β* est l'angle de dérive du véhicule V ;
- *vₓ* est la vitesse longitudinale du véhicule V ;
- *w_{z}* est la vitesse angulaire du véhicule V ;
- *δ* est l'angle de braquage des roues 3 ;
- *αₓ* est l'accélération longitudinale du véhicule V ;
- *C_{f}* est le coefficient de rigidité des roues 3 avant ;
- *Cᵣ* est le coefficient de rigidité des roues 5 arrière ;
- *l_{f}* est la distance entre le centre de gravité G du véhicule V et l'axe 4 des roues 3 avant ;
- *lᵣ* est la distance entre le centre de gravité G du véhicule V et l'axe 6 des roues 5 arrière ;
- *J* est le moment d'inertie du véhicule V ; et
- *m* est la masse du véhicule V.

Ce modèle de la dynamique latérale du véhicule V peut être réécrit à l'aide d'une méthode d'Euler afin d'obtenir les équations d'état du modèle dynamique dans un système en temps discret. Ce système en temps discret peut être formulé grâce à une représentation de Takagi-Sugeno en logique floue (aussi appelé modèle TS) sous la forme suivante : ${x}_{k + 1} = {\sum }_{i = 1}^{{n}_{r}} {\overline{ω}}_{k}^{i} \left({ζ}_{k}\right) \left({A}^{i}{x}_{k}+{B}^{i}{u}_{k}\right) + {Eω}_{k}$ ${y}_{k} = {Cx}_{k} + {Fυ}_{k}$ dans lequel :
- *k* ∈ € N est la variable de temps discret ;
- *x* = [*β w_{z} vₓ*]*^{T}* est un vecteur des variables d'état ;
- *u* = [*δ αₓ*]*^{T}* est un vecteur de données de commande ;
- *y* = [ *w_{z} vₓ*]*^{T}* est un vecteur de données mesurées ;
- *ω* est un vecteur caractérisant les incertitudes associées aux variables d'états à estimer ;
- *v* est un vecteur caractérisant les bruits liés aux mesures ;
- *Aⁱ*, *Bⁱ*, *C, E,* et *F* sont des matrices des variables d'état présentant des dimensions adaptées ;
- *nᵣ* est le nombre de règles en logique floue selon le modèle TS ;
- *ζ* = [*w_{z} vₓ*]*^{T}* est un vecteur des variables initiales ;
- ${\overline{ω}}_{k}^{i}$ est un ensemble de fonctions d'appartenance tel que la propriété de convexité est satisfaite, à savoir ${\overline{ω}}_{k}^{i} \left({ζ}_{k}\right) > 0$ et ${\sum }_{i = 1}^{{n}_{r}} {\overline{ω}}_{k}^{i} \left({ζ}_{k}\right) = 1$.

Pour l'application particulière décrite dans la présente description, le nombre de règles de logique floue est *nᵣ* = 4. Ce nombre est déterminé par les limites maximales et minimales des variables d'état des vitesses longitudinale *vₓ* et angulaire *w_{z}*.

À partir du système sous la forme d'une représentation de Takagi-Sugeno en logique floue tel que présenté ci-dessus, il est possible d'obtenir la structure de l'observateur zonotopique. Pour cela, on considère que les variables d'état sont bornées par un zonotope à chaque échantillonnage de temps discret k de sorte que : ${x}_{k} = \left〈{c}_{k}, {R}_{k}\right〉$ avec :
- *c* le centre de l'observateur zonotopique ; et
- *R* la matrice génératrice de l'observateur zonotopique comprenant l'incertitude sur les variables à estimer.

En outre, on considère que l'incertitude *ω* sur les variables d'état à estimer et les bruits *v* sont également bornés par des zonotopes de sorte que *ω =* < 0, *I_{n_{ω}} >* et $υ = \left〈0, {I}_{{n}_{υ}}\right〉 .$

En conséquence, la structure de l'observateur zonotopique peut être présentée sous la forme suivante : $\left〈{c}_{k + 1}, {R}_{k + 1}\right〉 = {\sum }_{i = 1}^{{n}_{r}} {\overline{ω}}_{k}^{i} \left({ζ}_{k}\right) \left[\begin{matrix}\left(\left({A}^{i}-{L}^{i}C\right)⊙\left〈{c}_{k}, {R}_{k}\right〉\right) ⊕ \left({B}^{i}⊙\left〈{u}_{k}, 0\right〉\right) ⊕ … \\ … ⊕ \left(E⊙\left〈0, {I}_{{n}_{ω}}\right〉\right) ⊕ \left({L}^{i}⊙\left〈{y}_{k}, 0\right〉\right) ⊕ \left(-{L}^{i}F⊙\left〈0, {I}_{{n}_{υ}}\right〉\right)\end{matrix}\right]$ dans laquelle :
- ⊕ est le symbole mathématique de l'addition de Minkowski ;
- ⊙ est le symbole mathématique de la transformation linéaire ;
- L est une matrice de gain prédéterminée de l'observateur zonotopique ; et
- *I_{n_{ω}}* et *I_{nᵥ}* sont les matrices identités, avec *n_{ω} =* 3 et *nᵥ =* 2 leurs dimensions respectives.

En appliquant les opérations d'addition de Minkowski et de transformation linéaire dans l'équation ci-dessus, les composants de l'observateur zonotopique peuvent s'écrire comme suit : ${c}_{k + 1} = {\sum }_{i = 1}^{{n}_{r}} {\overline{ω}}_{k}^{i} \left({ζ}_{k}\right) \left(\left({A}^{i}-{L}^{i}C\right){c}_{k}+{B}^{i}{u}_{k}+{L}^{i}{y}_{k}\right)$ ${R}_{k + 1} = {\sum }_{i = 1}^{{n}_{r}} {\overline{ω}}_{k}^{i} \left({ζ}_{k}\right) \left(\left[\left({A}^{i}-{L}^{i}C\right){R}_{k}, E,-{L}^{i}F\right]\right)$

Tous les paramètres de l'observateur zonotopique sont connus puisqu'ils découlent des données de l'ensemble de données d'entrée fournies par l'unité d'acquisition 8 du système d'aide à la conduite 2, à l'exception de la matrice de gain L. Ainsi, il convient de déterminer préalablement cette matrice de gain L afin de pouvoir utiliser l'observateur zonotopique.

Dans un mode de réalisation préféré, la matrice de gain *L* est déterminée de façon à minimiser l'erreur d'estimation et garantir la stabilité de l'observateur zonotopique. Pour cela, la matrice de gain L est déterminée en utilisant le principe de dualité issu de la théorie de l'optimisation et du contrôle. Selon ce principe, une matrice de gain optimale (à savoir celle qui minimise l'erreur d'estimation et assure la stabilité) est la matrice telle qu'il existe un scalaire y > 0 et des matrices de covariance des états *Q_{ω} = EE^{T} >* 0 et des bruits de mesure *Qᵥ* = *FF^{T} >* 0 tels que *Y* et *Vⁱ* sont des solutions possibles au problème d'optimisation qui s'écrit comme suit : *min γ*sous les conditions suivantes : $\left[\begin{matrix}- ϒ & {ϒA}^{i} - {V}^{i} C & Eϒ & {V}^{i} \\ {A}^{i , T} ϒ - {C}^{T} {V}^{i , T} & - ϒ & 0 & 0 \\ {ϒE}^{T} & 0 & - I & 0 \\ {V}^{i , T} & 0 & 0 & - {Q}_{υ}^{- 1}\end{matrix}\right] < 0$ $\left[\begin{matrix}γI & I \\ I & ϒ\end{matrix}\right] > 0 .$

Lorsque les solutions au problème d'optimisation ci-dessus ont été trouvées pour toutes les règles de logique floue (à savoir pour les *i* règles avec i = 1, ...*nᵣ*), on dispose d'une matrice de gain optimale *Lⁱ* = *Y*⁻¹*Vⁱ* associées à chacune des règles de logique floue. Ainsi, la matrice de gain optimale est obtenue à l'aide de la formule suivante : $L = {\sum }_{i = 1}^{{n}_{r}} {\overline{ω}}_{k}^{i} \left({ζ}_{k}\right) {L}^{i avec i = 1 , … {n}_{r}} .$

La matrice de gain prédéterminée que l'on utilise pour paramétrer l'observateur zonotopique correspond à la matrice de gain optimale.

La détermination de la matrice de gain optimale de l'observateur zonotopique peut être réalisée indépendamment du véhicule V. En effet, la résolution du problème d'optimisation peut être mise en œuvre préalablement sur un autre calculateur (non représenté) que celui du dispositif d'estimation 1. Une fois que la matrice de gain optimale est déterminée, celle-ci est intégrée dans l'algorithme du calculateur 12 comprenant l'observateur zonotopique et il n'est plus nécessaire de la déterminer à nouveau. Ainsi, les opérations restantes pour réaliser l'estimation de la valeur de l'angle de dérive *β* en temps réel sur le véhicule V, se résument à des multiplications et des additions de matrices et de vecteurs. Ces opérations sont simples à réaliser et ne demandent pas beaucoup de ressources de calcul.

Le calculateur 12 du dispositif d'estimation 1 est apte à mettre en œuvre l'observateur zonotopique obtenu tel que décrit ci-dessus. Le calculateur 12 ainsi paramétré permet d'estimer la valeur de l'angle de dérive *β* du véhicule V.

Dans un mode de réalisation particulier, le calculateur 12 du dispositif d'estimation 1 est également configuré pour déterminer au moins une valeur d'incertitude associée à l'angle de dérive *β* du véhicule V estimée.

Comme représenté schématiquement sur la figure 2, le dispositif d'estimation 1 comprend une unité de transmission 13 configurée pour transmettre la valeur de l'angle de dérive *β* du véhicule V déterminée par le calculateur 12 à un dispositif utilisateur. Dans un mode de réalisation particulier, l'unité de transmission 13 est également configurée pour transmettre la ou les valeurs d'incertitude associées à l'angle de dérive *β* du véhicule V estimée, à un dispositif utilisateur.

Dans le mode de réalisation particulier de la figure 2, le dispositif utilisateur correspond au calculateur 9 du système d'aide à la conduite 2. Toutefois, dans d'autres modes de réalisation, le dispositif utilisateur peut correspondre à un autre système nécessitant une information sur l'angle de dérive *β* du véhicule V et/ou une information sur l'incertitude associée.

Ainsi, grâce au dispositif d'estimation 1 tel que décrit ci-dessus, on est en mesure d'estimer de manière fiable et précise une grandeur qui n'est pas mesurée directement sur le véhicule V, à savoir la valeur de l'angle de dérive *β*. Par conséquent, la valeur de l'angle de dérive *β* du véhicule V peut être prise en compte par des systèmes du véhicule V tels que le système d'aide à la conduite 2, et notamment des systèmes de gestion du comportement latéral du véhicule V comme le système de maintien dans la voie. La prise en compte de l'angle de dérive *β* dans de tels systèmes d'aide à la conduite permet de rendre lesdits systèmes plus performants, en particulier plus précis.

En outre, l'estimation réalisée par le dispositif d'estimation 1 est rendue particulièrement robuste par la conception de l'observateur zonotopique qui permet de prendre en compte des types très variés d'incertitudes et de bruits de mesures liés aux variables d'état à estimer. Cela permet notamment de généraliser l'utilisation du dispositif d'estimation 1 à tout type de variable d'état, indépendamment du type d'incertitudes associées audites variables d'état.

De plus, la structure de l'observateur zonotopique faisant intervenir une représentation de Takagi-Sugeno en logique floue, permet de rendre le dispositif d'estimation 1 particulièrement économe en termes de ressources de calcul pour les calculateurs du véhicule V. En effet, les opérations demandant le plus de ressources de calcul, à savoir la détermination de la matrice de gain optimale de l'observateur zonotopique, peuvent être entièrement réalisées au préalable et indépendamment du véhicule V.

Par ailleurs, une autre application du dispositif d'estimation 1 peut être la détection de pannes de capteurs du véhicule V. En effet, grâce à l'utilisation de l'observateur zonotopique, on dispose d'informations sur les incertitudes associées à une grandeur, dans le cas présent les incertitudes associées à l'angle de dérive *β* du véhicule V. Ainsi, en comparant la valeur d'une grandeur mesurée à la valeur de la même grandeur estimée, on est en mesure de déterminer si la différence entre ces valeurs est cohérente ou non avec les incertitudes associées. Dans le cas où la valeur mesurée n'est pas cohérente avec les incertitudes associées à la valeur estimée, cela peut être révélateur d'un disfonctionnement d'un capteur.

Le dispositif d'estimation 1 tel que décrit ci-dessus est adapté pour mettre en œuvre un procédé P1 d'estimation destiné à estimer la valeur de l'angle de dérive *β* du véhicule V. Le procédé P1, représenté schématiquement sur la [Fig.4] dans un mode de réalisation particulier, comprend une suite d'étapes successives mise en œuvre par le dispositif d'estimation 1. Cette suite d'étapes comprend une étape E1 d'acquisition, une étape E2 d'estimation et une étape E3 de transmission.

L'étape E1 est mise en œuvre par l'unité d'acquisition 11 pour acquérir les données d'état représentatives de la dynamique du véhicule V.

L'étape E2 est mise en œuvre par le calculateur 12 pour déterminer au moins la valeur de l'angle de dérive *β* du véhicule V à l'aide d'un observateur zonotopique et des données d'état acquises à l'étape E1. Dans un mode de réalisation particulier, l'étape E2 comprend également la détermination d'au moins une valeur d'incertitude associée à la valeur de l'angle de dérive *β*.

L'étape E3 est mise en œuvre par l'unité de transmission 13 pour transmettre au moins la valeur de l'angle de dérive *β* déterminée à l'étape E2, à un dispositif utilisateur, à savoir le calculateur 9 du système d'aide à la conduite 2. Dans un mode de réalisation particulier, l'étape E3 comprend également la transmission de la ou des valeurs d'incertitude associées à la valeur de l'angle de dérive *β*.

Dans un mode de réalisation particulier représenté sur la [Fig.4], le procédé P1 comprend une étape E0 préliminaire mise en œuvre avant la suite d'étapes E1, E2 et E3. L'étape E0 consiste à déterminer la matrice de gain L prédéterminée pour paramétrer l'observateur zonotopique. La matrice de gain L prédéterminée peut correspondre à la matrice de gain optimale qui est obtenue tel que décrit précédemment.

Par ailleurs, le système d'aide à la conduite 2 tel que décrit ci-dessus, est adapté pour mettre en œuvre un procédé P2 d'aide à la conduite du véhicule V destiné à commander le système de direction 7 du véhicule V de manière à corriger la trajectoire dudit véhicule V si nécessaire. Le procédé P2, représenté schématiquement sur la [Fig.4] dans un mode de réalisation particulier, comprend une suite d'étapes successives mise en œuvre par le système d'aide à la conduite 2. Cette suite d'étapes comprend une étape E10 d'acquisition, une étape E20 d'estimation, une étape E30 de détermination et une étape E40 de commande.

L'étape E10 est mise en œuvre par l'unité d'acquisition 8 pour acquérir l'ensemble de données d'entrée représentatives de la dynamique et/ou de la configuration du véhicule V.

L'étape E20 est mise en œuvre par le dispositif d'estimation 1 pour déterminer au moins la valeur de l'angle de dérive *β* du véhicule V à partir de données de l'ensemble de données d'entrée. L'étape E20 correspond à la mise en œuvre du procédé P1.

L'étape E30 est mise en œuvre par le calculateur 9 pour déterminer l'ordre de commande pour le système de direction 11 du véhicule V à partir de la loi de commande prenant en compte des données de l'ensemble de données d'entrée acquis à l'étape E10 et la valeur de l'angle de dérive *β* déterminée à l'étape E20.

L'étape E40 est mise en œuvre par le dispositif de commande 10 pour commander le système de direction 11 du véhicule V à l'aide de l'ordre de commande déterminé à l'étape E30.

## Revendications

1. Procédé d'estimation d'une valeur de l'angle de dérive (*β*) d'un véhicule (V),
**caractérisé en ce que** le procédé (P1) comprend la suite d'étapes successives suivante :
- une étape (E1) d'acquisition, mise en œuvre par une unité d'acquisition (11), pour acquérir des données d'état représentatives d'une dynamique du véhicule (V) ;
- une étape (E2) d'estimation, mise en œuvre par un calculateur (12), pour déterminer au moins la valeur de l'angle de dérive (*β*) du véhicule (V) à l'aide d'un observateur zonotopique et des données d'état acquises à l'étape (E1) d'acquisition ; et
- une étape (E3) de transmission, mise en œuvre par une unité de transmission (13), pour transmettre au moins la valeur de l'angle de dérive (*β*) déterminée à l'étape (E2) d'estimation, à un dispositif utilisateur.

2. Procédé d'estimation selon la revendication 1,
**caractérisé en ce que** les données d'état acquises à l'étape (E1) d'acquisition comprennent au moins les données suivantes : la vitesse longitudinale (*vₓ*) du véhicule (V), la vitesse angulaire (*w_{z}*) du véhicule (V), l'accélération longitudinale (*αₓ*) du véhicule (V) et l'angle de braquage (*δ*) de roues du véhicule (V).

3. Procédé d'estimation selon l'une des revendications 1 et 2, **caractérisé en ce que** l'observateur zonotopique est défini par la formule mathématique suivante : ${x}_{k + 1} = \left〈{c}_{k + 1}, {R}_{k + 1}\right〉$ dans laquelle :
- *x* = [*β w_{z} vₓ*]*^{T}* est un vecteur des variables d'état à estimer ;
- *c* est le centre de l'observateur zonotopique ;
- R est la matrice génératrice de l'observateur zonotopique ; et
- *k*€ ∈ N est une variable de temps discret,
*c*_{*k*+1} et *R*_{*k*+1} étant définis par les formules suivantes : ${c}_{k + 1} = {\sum }_{i = 1}^{{n}_{r}} {\overline{ω}}_{k}^{i} \left({ζ}_{k}\right) \left(\left({A}^{i}-{L}^{i}C\right){c}_{k}+{B}^{i}{u}_{k}+{L}^{i}{y}_{k}\right) ;$ ${R}_{k + 1} = {\sum }_{i = 1}^{{n}_{r}} {\overline{ω}}_{k}^{i} \left({ζ}_{k}\right) \left(\left[\left({A}^{i}-{L}^{i}C\right){R}_{k}, E, -{L}^{i}F\right]\right) ,$
dans lesquelles :
- *nᵣ* est un nombre de règles en logique floue selon un modèle de Takagi-Sugeno ;
- *u* = [*δ αₓ*]*^{T}* est un vecteur de données de commande ;
- *y* = [ *w_{z} vₓ*] *^{T}* est un vecteur de données mesurées ;
- *Aⁱ Bⁱ, C, E,* et F sont des matrices des variables d'état présentant des dimensions adaptées ;
- ζ = [ *w_{z} vₓ*] *^{T}* est un vecteur des variables initiales ;
- ${\overline{ω}}_{k}^{i}$ est un ensemble de fonctions d'appartenance tel que la propriété de convexité est satisfaite, à savoir ${\overline{ω}}_{k}^{i} \left({ζ}_{k}\right) > 0$ et ${\sum }_{i = 1}^{{n}_{r}} {\overline{ω}}_{k}^{i} \left({ζ}_{k}\right) = 1$; et
- L est une matrice de gain prédéterminée de l'observateur zonotopique.

4. Procédé d'estimation selon la revendication 3, **caractérisé en ce que** le procédé comprend une étape (E0) préliminaire, mise en œuvre par un calculateur avant la suite d'étapes et de façon indépendante du véhicule (V), pour déterminer une matrice de gain optimale minimisant l'erreur d'estimation sur la valeur de l'angle de dérive (*β*), la matrice de gain (L) prédéterminée de l'observateur zonotopique correspondant à ladite matrice de gain optimale.

5. Procédé d'estimation selon la revendication 4,
**caractérisé en ce qu'**à l'étape (E0) préliminaire, la matrice de gain optimale de l'observateur zonotopique est déterminée à l'aide de la formule mathématique suivante : $L = {\sum }_{i = 1}^{{n}_{r}} {\overline{ω}}_{k}^{i} \left({ζ}_{k}\right) {L}^{i avec i = 1 , … , {n}_{r}}$
dans laquelle *Lⁱ = Y⁻¹Vⁱ, Y et Vⁱ* étant les solutions du système d'inégalité matricielle linéaire suivant de sorte à minimiser le scalaire *γ* : $\left[\begin{matrix}- Y & {YA}^{i} - {V}^{i} C & EY & {V}^{i} \\ {A}^{i , T} Y - {C}^{T} {V}^{i , T} & - Y & 0 & 0 \\ {YE}^{T} & 0 & - I & 0 \\ {V}^{i , T} & 0 & 0 & - {Q}_{v}^{- 1}\end{matrix}\right] < 0$ $\left[\begin{matrix}γI & I \\ I & Y\end{matrix}\right] > 0$
dans lequel :
- *Q_{ω}*= *EE^{T}* est la covariance du zonotope englobant les incertitudes d'état ;
- *Qᵥ = FF^{T}* est la covariance du zonotope englobant les bruits de mesure ; et
- *I* est la matrice identité.

6. Procédé d'estimation selon l'une quelconque des revendications 1 à 5,
**caractérisé en ce qu'**à l'étape (E2) d'estimation au moins une valeur d'incertitude associée à la valeur de l'angle de dérive (*β*) est déterminée, ladite valeur d'incertitude étant transmise au dispositif utilisateur à l'étape (E3) de transmission.

7. Dispositif d'estimation d'une valeur de l'angle de dérive (*β*) d'un véhicule (V),
**caractérisé en ce qu'**il comporte au moins :
- une unité d'acquisition (11) configurée pour acquérir des données d'états représentatives d'une dynamique du véhicule (V) ;
- un calculateur (12) configuré pour déterminer au moins la valeur de l'angle de dérive (*β*) du véhicule (V) à l'aide d'un observateur zonotopique et des données d'état acquises par l'unité d'acquisition (11) ; et
- une unité de transmission (13) configurée pour transmettre la valeur de l'angle de dérive (*β*) du véhicule (V) déterminée par le calculateur (12) à un dispositif utilisateur.

8. Véhicule,
**caractérisé en ce qu'**il comporte au moins un dispositif d'estimation (1) selon la revendication 7.

9. Procédé d'aide à la conduite d'un véhicule (V), en particulier d'aide au maintien dans la voie, destiné à commander un système de direction (7) du véhicule (V) de manière à corriger la trajectoire dudit véhicule (V) si nécessaire,
**caractérisé en ce que** ledit procédé (P2) comprend au moins la suite d'étapes successives suivante :
- une étape (E10) d'acquisition, mise en œuvre par une unité d'acquisition (8), pour acquérir un ensemble de données d'entrée représentatives d'une dynamique et/ou d'une configuration du véhicule (V) ;
- une étape (E20) d'estimation, mise en œuvre par un dispositif d'estimation (1), pour déterminer au moins une valeur de l'angle de dérive (*β*) du véhicule (V) à partir de données de l'ensemble de données d'entrée ;
- une étape (E30) de détermination, mise en œuvre par un calculateur (9), pour déterminer un ordre de commande pour le système de direction (7) du véhicule (V) à partir d'une loi de commande prenant en compte des données de l'ensemble de données d'entrée acquis à l'étape (E10) d'acquisition et la valeur de l'angle de dérive (*β*) déterminée à l'étape (E20) d'estimation ; et
- une étape (E40) de commande, mise en œuvre par un dispositif de commande (10), pour commander le système de direction (11) du véhicule (V) à l'aide de l'ordre de commande déterminé à l'étape (E30) de détermination,
la détermination de la valeur de l'angle de dérive (*β*) du véhicule (V) à l'étape (E20) d'estimation étant réalisée en mettant en œuvre le procédé (P1) d'estimation selon l'une quelconque des revendications 1 à 6.

10. Système d'aide à la conduite d'un véhicule (V), en particulier de maintien dans la voie, destiné à commander un système de direction (7) du véhicule (V) de manière à corriger la trajectoire dudit véhicule (V) si nécessaire,
**caractérisé en ce que** ledit système d'aide à la conduite (2) comporte au moins :
- une unité d'acquisition (8) configurée pour acquérir un ensemble de données d'entrée représentatives d'une dynamique et/ou d'une configuration du véhicule (V) ;
- un dispositif d'estimation (1) configuré pour déterminer au moins la valeur de l'angle de dérive (*β*) du véhicule (V) à partir de données de l'ensemble de données d'entrée acquis par l'unité d'acquisition (8) ;
- un calculateur (9) configuré pour déterminer un ordre de commande pour le système de direction (7) du véhicule (V) à partir d'une loi de commande prenant en compte des données de l'ensemble de données d'entrée acquis par l'unité d'acquisition (8) et la valeur de l'angle de dérive (*β*) déterminée par le dispositif d'estimation (1) ;
- un dispositif de commande (10) configuré pour commander le système de direction (7) du véhicule (V) à l'aide de l'ordre de commande déterminé par le calculateur (9),
le dispositif d'estimation (1) correspondant à un dispositif selon la revendication 7.

11. Véhicule,
**caractérisé en ce qu'**il comporte au moins un système d'aide à la conduite (2) selon la revendication 10.
